# EUROPEAN PATENT SPECIFICATION

(11) **EP 4 695 315 B1**
(45) Date of publication and mention of the grant of the patent: **18.11.2026**
(21) Application number: 24725398.2
(22) Date of filing: 12.04.2024
(51) Int. Cl.: C08G 59/68, C09D 163/00

(54) **UV LACQUER FOR DIRECT TO METAL APPLICATION**
UV-LACK FÜR DEN DIREKT-METALL-AUFTRAG
VERNIS UV POUR APPLICATION DIRECTE SUR LE MÉTAL

(30) Priority: 13.04.2023 EP 23167821
(43) Date of publication of application: 18.02.2026
(73) Proprietor: ACTEGA do Brasil Tintas e Vernizes Ltda., 18147-000 Araçariguama (BR)
(72) Inventor: GALHARDO, Antonio, 06460 Barueri Barueri (BR); VIEIRA, Alan, 06460 Barueri Barueri (BR)
(74) Representative: Altana IP Department
(86) International application number: PCT/BR2024/050150
(87) International publication number: WO 2024/211979

(56) References cited:
- EP-B1- 1 497 338
- CN-A- 104 710 890
- KR-A- 20160 115 612
- US-A- 4 090 936

## Description

The present invention relates to UV-curable lacquer compositions that are in particular suitable for use on plasma-treated substrates like tin-free steel, tin-plated steel or aluminum. These substrates can be used as industrial, food or beverage packaging materials.

For many years, metal packaging materials have been coated using heat-curable coating compositions. Such coatings contain volatile organic solvents and consume quite a lot of energy. To lower or even eliminate the amount of such organic solvents and to lower the energy consumption needed for the full cure of the coating, Applicant has developed various types of UV-curable coating systems. By using these UV-curable coatings, the amount of solvent released during curing can be reduced by more than 40% in comparison to the heat-curable systems. Since UV-curing is a fast process (full cure in less than 20 seconds), the use of UV-curable coatings leads to a faster production process at lower costs.

US4,090,936 relates to photo hardenable compositions, where such composition can comprise an epoxide, and acrylate polymer and a complex salt photoinitiator.

EP1497338 relates to a method of curing polymerizable compositions, especially surface coatings, by means of plasma. Radiation-curable formulation are disclosed which are prepared by mixing together epoxy acrylate, diacrylates and a photoinitiator. It is further disclosed that binders, such as cellulose acetate butyrate, can improve adhesion to substrates.

KR20160115612 relates to a composition for hard coating layers using a composition comprising an epoxy-base photo cationic polymerizable compound, polycaprolactone triol and a photoinitiator.

CN104710890 relates to a peelable protective ink containing acrylate rubber, cellulose acetate butyrate and an epoxy resin.

It was found that using UV-curable lacquers on tinplate or tin free steel showed some non-consistent performance, partly due to the adhesion performance of these coatings. It is known in the art that the above-mentioned substrates need to be treated before a protective coating can be applied, since the surface of these substrates is often contaminated. This contamination reduces the adhesion of a lacquer that is applied to such surface.

It was found that by using a plasma pretreatment, the surface of such substrates shows an improved adhesion of a lacquer that is applied, in comparison to the untreated surface.

However, it was noted that with the available UV-curable lacquers, still defects were observed leading to poor adhesion, which makes these coated substrates less suitable for use as packaging material for industrial, food or beverages.

The present invention provides a UV-lacquer composition that shows a superior adhesion to the substrates that are typically used as food or beverages packaging material, such as tin-free steel, tin-plated steel or aluminum.

The present invention relates to UV-curable lacquer composition comprising
a) A mixture of different epoxy resins,
b) An acrylate compound,
c) A photoinitiator,
d) Polycaprolactone triol, and
e) Cellulose acetate butyrate.

Tin free steel (TFS) is widely used as packaging material for food and beverages, for example as a food container. TFS consists of a thin layer of chromium and a layer of chromium oxide deposited on a steel base. This material has a metallic luster and good corrosion resistance.

Tinplate or tin plated steel consists of a thin layer of tin-iron alloy, a layer of tin, a layer of tin oxide and a passivation layer deposited on a steel base. This material has a good corrosion resistance, a good formability, and is easy to weld.

### Coating composition

The coating composition according to the present invention comprises the following ingredients:

### Epoxy resin

The composition according to the present invention comprises a mixture of different epoxy resins. In one embodiment, this mixture comprises an aliphatic epoxy resin and an aromatic epoxy resin. In a further embodiment, the mixture of different epoxy resins comprises at least 85 wt.% of one or more aliphatic epoxy resins, the wt.% being calculated based on the total weight of epoxy resins present in the lacquer composition.

Suitable aliphatic epoxy resins that can be used in the composition according to the present invention include epoxy resins, which are customary in epoxy resin technology. Examples of such epoxy resins include the following:
I) Polyglycidyl ethers or poly-(p-methylglycidyl) ethers, obtainable by reacting a compound having at least one, preferably two, free alcoholic hydroxyl groups with epichlorohydrin or β-methylepichlorohydrin under alkaline conditions or in the presence of an acidic catalyst with subsequent alkali treatment. The glycidyl ethers of this type are derived for example from acyclic alcohols, such as ethylene glycol, diethylene glycol or higher poly(oxyethylene) glycols, propane-1,2-diol or poly(oxypropylene) glycols, propane-1,3-diol, butane-1,4-diol, poly(oxytetramethylene) glycols, pentane-1,5-diol, hexane-1,6-diol, hexane-2,4,6-triol, glycerol, C12-14OH (Araldit^{®} DY- E) 1,1,1-trimethylolpropane, pentaerythritol, sorbitol, and also from polyepichlorohydrins. Other glycidyl ethers of this type are derived from cycloaliphatic alcohols, such as 1,4-cyclohexanedimethanol, bis(4-hydroxycyclohexyl)methane, 2,2-bis(4-hydroxycyclohexyl)- propane or tricyclodecanedimethanol.
II) Cycloaliphatic epoxy resins, 3,4-Epoxycyclohexylmethyl - 3,4-epoxycyclohexylcarboxylate is a cycloaliphatic epoxy that can be synthesized by the reaction of 3-cyclohexenylmethyl 3-cyclohexenecarboxylate with paracetic acid. These aliphatic resins show a number of useful properties in the composition according to the present invention, such as thermal stability.

Suitable aromatic epoxy resins that can be used in the composition according to the present invention include glycidyl ethers prepared by the reaction of epichlorohydrin with an aromatic compound containing at least one hydroxyl group carried out under alkaline reaction conditions. Other suitable epoxy resins can be prepared by the reaction of epichlorohydrin with mononuclear di- and trihydroxy phenolic compounds such as resorcinol and phloroglucinol, selected polynuclear polyhydroxy phenolic compounds such as bis(p-hydroxyphenyl)methane and 4,4-dihydroxybiphenyl. Epoxy resins suitable for the invention compositions have molecular weights generally within the range of 86 to 10,000, preferably 200 to 1500. The commercially-available epoxy resin 2,2-bis(4-hydroxyphenylpropane) (bisphenol-A) having a molecular weight of 400, an epoxide equivalent (ASTM D-1652) of 185-192, and an n value (from the formula above) of 0.2, is presently the preferred epoxy resin because of its low viscosity and commercial availability.

Generally, the composition of the present invention comprises from 30 to 60 wt.% of epoxy resins, based on the total weight of the composition.

### Acrylate compound

The composition according to the present invention comprises an acrylate compound. This acrylate compound should have at least two unsaturated carbon-carbon bonds. Such unsaturated bonds can open up under the influence of UV-light in the presence of a photoinitiator.

Suitable acrylate compounds that can be used in the composition according to the present invention include ethoxylated (3) trimethylolpropane triacrylate, glyceryl propoxy triacrylate or trimethylolpropane triacrylate.

Generally, the composition of the present invention comprises from 25 wt.% to 35 wt.% of an acrylate compound, based on the total weight of the composition.

### Photoinitiator

The composition according to the present invention comprises an effective amount of a photoinitiator or a mixture of different photoinitiators, to effect the photocure of the composition by exposure to UV light. Generally, this amount is from about 0,01 wt.% to about 10 wt.% based on the total weight of the composition. Examples of photoinitiator that can be used in the composition according to the present invention include hydroxycyclohexylphenyl ketone, benzophenone, triaryl sulfonium hexafluoro phosphonium in propylene carbonate and others

### Polycaprolactone triol

Polycaprolactone triol is present in the composition according to the present invention and greatly enhances the strength of the coating film after cure. Generally, the composition comprises between 5 - 10 wt.% of polycaprolactone triol, based on the total weight of the composition.

### Cellulose acetate butyrate.

Cellulose acetate butyrate is present in the composition according to the present invention to improve the adhesion of the composition to various (metal) substrates. Generally, the composition comprises between 10 wt.% - 15 wt.% of Cellulose acetate butyrate, based on the total weight of the composition.

### Application process

The invention also relates to a process for the application of the above-described coating composition. This process comprises the following steps:
- Prior to application of a coating composition a plasma treatment of the surface of the substrate is performed,
- Following the plasma treatment, the coating composition is applied to the plasma-treated surface of the substrate, and
- Curing of the coating composition by exposing the substrate obtained in step ii) to UV radiation.

In this process, preferably tinplate, tin free steel or aluminum is used as the substrate.

The plasma treatment of the metal substrate can be done, for example, by using the Openair-Plasma^{®} process, developed by the company Plasmatreat.

### EXAMPLES

Different types of lacquers were applied to plasma-treated and non-plasma-treated substrates. Thereafter different tests were performed and the adhesion of the lacquers to the substrate were evaluated as follows:

| **Test result** | **Score** |
|---|---|
| No peeling off | 1 |
| Partial peeling off | 2 |
| Total peeling off | 3 |

The following lacquers were used

| **Lacquer #** | **Description** |
|---|---|
| Lacquer 1 | Lacquer according to the present invention |
| Lacquer 2 | State of the art UV curable lacquer supplied by ACTEGA |

The following substrates were used:

| **Substrate #** | **Description** |
|---|---|
| Substrate 1 | Untreated tin free steel |
| Substrate 2 | Plasma-treated tin free steel |
| Substrate 3 | Tinplate |
| Substrate 4 | Plasma-treated tinplate |

The results of the evaluation are presented in Table 1 and Table 2 below

**Table 1: Results of adhesion tests**

| | **Lacquer #** | 1 | 1 | 2* | 2* |
|---|---|---|---|---|---|
| | **Substrate #** | 2 | 4 | 1 | 2 |
| **Type of adhesion test** | | | | | |
| Stamped square box, adhesion at corners | | 1 | 1 | | |
| Normal adhesion | | 1 | 1 | 1 | 1 |
| reverse side of impact | | 1 | 1 | 3 | 3 |
| after pasteurization (1 hour @ 70C) | | 1 | 1 | | |
| after retort (1 hour @ 121C) | | 1 | 1 | | |
| after pH (10-11) treatment (1 hour @ 70C) | | 1 | 1 | 3 | 2 |
| after beading deformation | | 1 | 1 | 3 | 2 |
| after wedge bend | | 1 | 1 | 2 | 2 |

| | | | | | |
|---|---|---|---|---|---|
| *) Comparative example | | | | | |

## Claims

1. UV-curable lacquer composition comprising
a) A mixture of different epoxy resins,
b) An acrylate compound,
c) A photoinitiator,
d) Polycaprolactone triol, and
e) Cellulose acetate butyrate.

2. UV-curable lacquer composition of claim 1 wherein the mixture of different epoxy resins comprises an aliphatic epoxy resin and an aromatic epoxy resin.

3. UV-curable lacquer composition of claim 1 or 2 wherein the mixture of different epoxy resins comprises at least 85 wt.% of one or more aliphatic epoxy resins, the wt.% being calculated based on the total weight of epoxy resins present in the lacquer composition.

4. UV-curable lacquer composition of claim 2 or 3 wherein the epoxy resin mixture comprises a bisphenol-A-type epoxy resin.

5. UV-curable lacquer composition of claim 1 comprising
a) 30 - 60 wt.% of a mixture of different epoxy resins,
b) 25 - 35 wt.% of an acrylate compound or a mixture of different acrylate compounds,
c) 0,1 - 10 wt.% of a photoinitiator or a mixture of different photoinitiators,
d) 5 - 10 wt.% of a Polycaprolactone triol or a mixture of different polycaprolactone triols, and
e) 10 - 15 wt.% of cellulose acetate butyrate,
wherein the wt.% of the components is based upon the total weight of the composition.

6. A process for applying a coating to a metal substrate, comprising the following steps
i. Prior to application of a coating composition a plasma treatment of the surface of the substrate is performed,
ii. Following the plasma treatment, a coating composition is applied to the plasma-treated surface of the substrate, and
iii. Curing of the coating composition by exposing the substrate obtained in step ii) to UV radiation,
wherein the coating composition that is applied in step ii) is the UV-curable lacquer composition according to any of claims 1 to 5.

7. Process according to claim 6, **characterized in that** the metal substrate is selected from the group consisting of tinplate, tin free steel and aluminum.

## Patentansprüche

1. UV-härtbare Lackzusammensetzung, umfassend
a) einer Mischung aus verschiedenen Epoxidharzen,
b) einer Acrylat-Verbindung,
c) eines Photoinitiators,
d) Polycaprolactontriol und
e) Celluloseacetatbutyrat.

2. UV-härtbare Lackzusammensetzung nach Anspruch eins, wobei die Mischung aus verschiedenen Epoxidharzen ein aliphatisches Epoxidharz und ein aromatisches Epoxidharz umfasst.

3. UV-härtbare Lackzusammensetzung nach Anspruch eins oder zwei, wobei die Mischung verschiedener Epoxidharze mindestens 85 Gew.-Prozent eines oder mehrerer aliphatischer Epoxidharze umfasst, wobei die Gew.-Prozent auf der Grundlage des Gesamtgewichts der in der Lackzusammensetzung vorhandenen Epoxidharze berechnet werden.

4. UV-härtbare Lackzusammensetzung nach Anspruch zwei oder drei, wobei die Epoxidharzmischung ein Epoxidharz vom Bisphenol-A-Typ umfasst.

5. UV-härtbare Lackzusammensetzung nach Anspruch eins, umfassend
a) 30 - 60 Gew.-Prozent einer Mischung aus verschiedenen Epoxidharzen,
b) 25 - 35 Gew.-Prozent eines Acrylat-Compounds oder einer Mischung verschiedener Acrylat-Compounds,
c) 0,1 - 10 Prozent eines Photoinitiators oder einer Mischung verschiedener Photoinitiatoren,
d) fünf - zehn Gew.-% eines Polycaprolactontriols oder einer Mischung aus verschiedenen Polycaprolactontriolen und
e) 10 - 15 Prozent Celluloseacetatbutyrat,
wobei sich die Gew.-Prozent der Komponenten auf das Gesamtgewicht der Zusammensetzung beziehen.

6. Verfahren zum Auftragen einer Beschichtung auf ein Metallsubstrat, umfassend die folgenden Schritte
i. Vor dem Aufbringen einer Beschichtungszusammensetzung wird eine Plasmabehandlung der Oberfläche des Substrats durchgeführt,
ii. Im Anschluss an die Plasmabehandlung wird eine Beschichtungszusammensetzung auf die plasmabehandelte Oberfläche des Substrats aufgetragen, und
iii. Härtung der Beschichtungszusammensetzung durch Bestrahlung des in Schritt ii) erhaltenen Substrats mit UV-Strahlung,
wobei die in Schritt ii) aufgetragene Beschichtungszusammensetzung die UV-härtbare Lackzusammensetzung gemäß einem der Ansprüche eins bis fünf ist.

7. Verfahren nach Anspruch sechs, **dadurch gekennzeichnet, dass** das Metallsubstrat aus der Gruppe ausgewählt ist, die aus Weißblech, zinnfreiem Stahl und Aluminium besteht.

## Revendications

1. Composition de vernis durcissable aux UV comprenant
a) un mélange de différentes résines époxy,
b) d'un composé acrylate,
c) d'un photo-initiateur,
d) un triol de polycaprolactone, et
e) de l'acétate-butyrate de cellulose.

2. Composition de laque durcissable aux UV selon la revendication un, dans laquelle le mélange de différentes résines époxy comprend une résine époxy aliphatique et une résine époxy aromatique.

3. Composition de laque durcissable aux UV selon la revendication un ou deux, dans laquelle le mélange de différentes résines époxy comprend au moins 85 pour cent en poids d'une ou plusieurs résines époxy aliphatiques, le pourcentage en poids étant calculé par rapport au poids total des résines époxy présentes dans la composition de laque.

4. Composition de vernis durcissable aux UV selon la revendication deux ou trois, dans laquelle le mélange de résines époxy comprend une résine époxy de type bisphénol A.

5. Composition de laque durcissable aux UV selon la revendication un, comprenant
a) 30 à 60 Prozent in Gewicht eines Gemischs verschiedener Epoxidharze,
b) 25 à 35 Prozent in Gewicht eines Acrylats oder eines Gemischs verschiedener Acrylate,
c) 0,1 à 10 Prozent eines Photoinitiators oder eines Gemischs verschiedener Photoinitiatoren,
d) cinq à dix Prozent in Gewicht eines Triols von Polycaprolactone oder eines Gemischs von verschiedenen Triolen von Polycaprolactone, und
e) 10 à 15 Prozent in Gewicht von Acétate-butyrate de cellulose,
les pourcentages en poids des composants étant rapportés au poids total de la composition.

6. Procédé d'application d'un revêtement sur un substrat métallique, comprenant les étapes suivantes
i. Avant l'application d'une composition de revêtement, on effectue un traitement au plasma de la surface du substrat,
ii. À la suite du traitement au plasma, on applique une composition de revêtement sur la surface du substrat traitée au plasma, et
iii. le durcissement de la composition de revêtement par exposition du substrat obtenu à l'étape ii) à un rayonnement UV,
dans lequel la composition de revêtement appliquée à l'étape ii) est la composition de laque durcissable aux UV selon l'une quelconque des revendications un à cinq.

7. Procédé selon la revendication six, **caractérisé en ce que** le substrat métallique est choisi parmi le groupe constitué du fer-blanc, de l'acier sans étain et de l'aluminium.
